Europäisches Patentamt

European Patent Office

Office européen des brevets

(11) Numéro de publication: **0 363 242**

**A1**

## DEMANDE DE BREVET EUROPEEN

(21) Numéro de dépôt: 89402566.7

(51) Int. Cl.5: **B64G 1/64** , **F42B 3/00**

(22) Date de dépôt: 19.09.89

(30) Priorité: 05.10.88 FR 8813028

(43) Date de publication de la demande:
11.04.90 Bulletin 90/15

(84) Etats contractants désignés:
CH DE ES GB IT LI NL

(71) Demandeur: **AEROSPATIALE Société Nationale Industrielle**
**37, Boulevard de Montmorency**
**F-75781 Paris Cédex 16(FR)**

(72) Inventeur: **Delarue, Jean-Jacques**
**10 rue Sadi Lecointe**
**F-78140 Velizy(FR)**
Inventeur: **Patin, Michel**
**9 parc Hispano-Suiza**
**F-78130 Les Mureaux(FR)**
Inventeur: **Slama, Jean-Claude**
**6 rue Engels**
**F-78370 Plaisir(FR)**

(74) Mandataire: **Rinuy, Santarelli**
**14, avenue de la Grande Armée**
**F-75017 Paris(FR)**

(54) **Disposition de solidarisation/désolidarisation provisoire de deux éléments l'un à l'autre, et de séparation ultérieure.**

(57) Dispositif pour la solidarisation provisoire de deux éléments (1,2) l'un à l'autre, et leur séparation ultérieure, caractérisé en ce qu'il comporte un élément mâle (3) lié à l'un (1) des éléments et un élément femelle (4) lié à l'autre (2) élément, cet élément femelle comportant, dans un corps creux (6) allongé selon un axe (X-X), un manchon de retenue (30) adapté à se rétracter radialement sur l'élément mâle ou à se dilater, un piston coulissant axialement (17) pour la manoeuvre en rétraction/dilatation de ce manchon de retenue, et dans le piston, disposé le long de l'axe (X-X), un doigt d'éjection (18) qui lui est relié par un organe frangible (19), des moyens de commande sélective (14,23,24,25) étant prévus, soit pour la seule commande en mouvement du piston, soit pour en outre casser l'organe frangible et faire coulisser axialement le doigt d'éjection axialement en saillie vis-à-vis de ce piston.

FIG.1

## Disposition de solidarisation/désolidarisation provisoire de deux éléments l'un à l'autre, et de séparation ultérieure

L'invention a trait à un dispositif pour la solidarisation provisoire de deux éléments l'un à l'autre, comportant une unité de séparation pour la dissociation de ces éléments en réponse à un ordre de déclenchement généré à distance.

Un tel dispositif trouve en particulier des applications dans le domaine de l'espace. En effet, pendant le vol d'un engin, la mise en orbite d'un satellite, ou encore pendant la réalisation d'expériences sur stations orbitales, il est fréquent d'avoir besoin de désarrimer des dispositifs très divers (déploiement de bras, de panneaux,...).

Actuellement la majorité des dispositifs connus de solidarisation provisoire et de séparation se répartit en deux grandes catégories : des boulons explosifs, par exemple d'un type décrit dans les documents FR-1.088.492, US-3.053.131, US-3.196.745 ou US-4.002.120, et des écrous explosifs tels que décrits notamment dans les documents US-2.858.726, US-3.204.505, US-3.262.351 ou encore US-4.064.783.

Toutes les opérations d'accouplement réalisées à l'aide de ces dispositifs requièrent des procédures souvent délicates avec dans tous les cas des interventions manuelles directes sur ces dispositifs, ce qui dans certaines configurations, ambiances ou environnements, peut être contraignant, gênant, voire redhibitoire.

L'invention vise à pallier cet inconvénient grâce à un dispositif de solidarisation provisoire et de dissociation ou séparation qui présente le gros avantage de permettre, préalablement à la séparation/dissociation (ou ejection ou encore largage), des opérations d'accouplement et de désaccouplement adaptées à être commandées de façon automatique, c'est-à-dire sans intervention manuelle directe.

L'invention vise ainsi à permettre non seulement un désarrimage de "mission" (largage en cours de vol, de mise en orbite de satellite, etc.) grâce à un déclenchement généré par pyrotechnie mais aussi, au préalable, des désarrimages de "maintenance", les déclenchements étant alors générés par des pressions de gaz ou de fluide, les opérations d'assemblage et de désassemblage pouvant être répétées à de multiples reprises sans le moindre endommagement, ce qui est particulièrement intéressant.

Il est en effet souvent indispensable dans une phase de maintenance de pouvoir vérifier au cours du temps le bon fonctionnement de l'objet à larguer et de pouvoir le remplacer dans l'hypothèse d'un disfonctionnement. Toujours dans ce même contexte d'utilisation, la possibilité de réaliser des arrimages et désarrimages fréquents automatiques ou non sera particulièrement appréciée par un cosmonaute travaillant en apesanteur, état peu propice à des interventions manuelles complexes. Même dans l'hypothèse d'une intervention manuelle, le cosmonaute, lors des désarrimages et arrimages, sera simplement amené à retenir l'objet à larguer ou à le centrer par rapport au dispositif d'accrochage.

L'invention propose ainsi, notamment mais pas uniquement pour des applications spatiales, un dispositif pour la solidarisation provisoire de deux éléments l'un à l'autre, et leur séparation ultérieure, caractérisé en ce qu'il comporte un élément mâle lié à l'un des éléments et un élément femelle lié à l'autre élément, cet élément femelle comportant, dans un corps creux allongé selon un axe, un manchon de retenue adapté à se rétracter radialement sur l'élément mâle ou à se dilater, un piston coulissant axialement pour la manoeuvre en rétraction/dilatation de ce manchon de retenue, et dans le piston, disposé le long de l'axe, un doigt d'éjection qui lui est relié par un organe frangible, des moyens de commande sélective étant prévus, soit pour la seule commande en mouvement du piston, soit pour en outre casser l'organe frangible et faire coulisser axialement le doigt d'éjection axialement en saillie vis-à-vis de ce piston.

Selon des dispositions préférées de l'invention :

- les moyens de commande comportent une chambre étanche ménagée sur une tranche du piston dans laquelle débouche une buse d'injection de fluide sous pression/dépression ;
- la base d'injection communique avec un premier orifice adapté à être connecté à une source de pression/dépression et avec un second orifice adapté à être connecté à une source pyrotechnique de pression ;
- le manchon de retenue est formé d'une pluralité de secteurs adaptés à s'écarter et se rapprocher de l'axe ;
- chaque secteur comporte une tranche inclinée formant came adaptée à glisser sur une tranche globalement tronçonique du piston et une tranche opposée inclinée formant came adaptée à coopérer avec une bague tronçonique liée au corps de l'élément femelle et adaptée à être traversée par l'élément mâle ;
- un tronçon cylindrique de guidage est monté coulissant axialement le long du manchon de retenue, des surfaces globalement tronçoniques formant cames étant ménagées, respectivement extérieurement sur le manchon de retenue et intérieurement sur ce tronçon de guidage, adaptées par coopération réciproque à guider en rétraction et en dilatation les secteurs du manchon de retenue.

- ce tronçon de guidage fait partie d'un étui coulissant axialement dans le corps de l'élément femelle à l'encontre d'un organe de rappel élastique comportant un second tronçon cylindrique de guidage de plus faible diamètre que le premier tronçon, coulissant le long du piston et dont le fond, traversé par la buse d'injection, définit avec le piston une chambre étanche de pression ;

- l'organe de rappel élastique tend à ramener l'étui dans une configuration où le premier tronçon de guidage tend à maintenir le manchon de retenue rétracté ;

- l'élément mâle comporte une couronne de retenue adaptée à être retenue axialement par des épaulements ménagés en saillie radialement interne sur le manchon de retenue ;

- l'organe frangible est une goupille transversale présentant des zones affaiblies.

Des objets, caractéristiques et avantages de l'invention ressortent de la description qui suit, donnée à titre d'exemple non limitatif, en regard des dessins annexés sur lesquels :

- la figure 1 est une vue en coupe axiale d'un dispositif de solidarisation provisoire et de séparation conforme à l'invention, en configuration de solidarisation;

- la figure 2 en est une vue similaire, en configuration de désaccouplement ;

- la figure 3 est une vue similaire en configuration rétractée du seul élément femelle du dispositif des figures 1 et 2 ;

- la figure 4 est une vue en perspective partielle du manchon d'accrochage en montrant la partie supérieure ;

- la figure 5 en est une vue similaire, en montrant la partie inférieure ; et ·

- la figure 6 est une vue en coupe axiale du dispositif des figures 1 à 3 en configuration d'éjection.

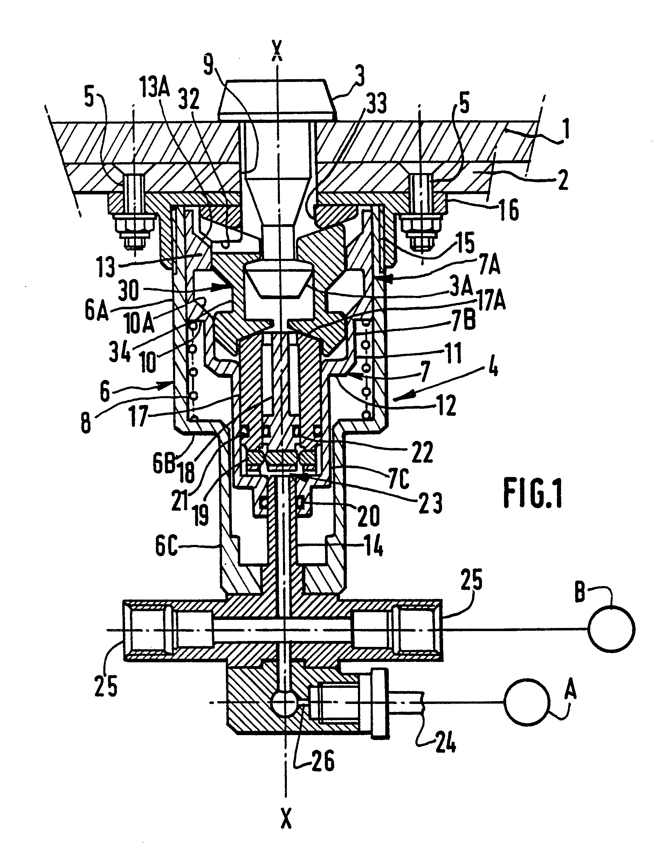

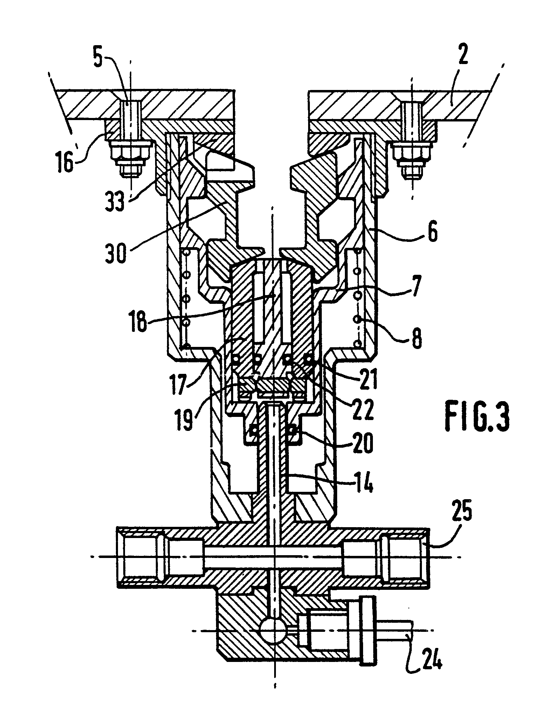

Les figures 1 à 6 représentent en diverses configurations un dispositif de solidarisation provisoire et de séparation adapté à accoupler et désaccoupler, à volonté, deux éléments 1 et 2 mobiles l'un par rapport à l'autre. Ce dispositif comporte un élément mâle 3 lié à l'un 1 des éléments et comportant une couronne de retenue 3A en saillie radiale, et un élément femelle 4 lié à l'autre élément 2. En pratique l'élément femelle 4 est lié à celui des éléments qui est fixe par rapport à une structure porteuse (non représentée), par exemple le corps d'un satellite.

La liaison des éléments mâle et femelle aux éléments à accoupler et à désaccoupler est réalisée par tous moyens connus appropriés, ici par soudure dans le cas de l'élément mâle 3, et par des boulons 5 dans le cas de l'élément femelle 4.

L'élément femelle 4 comporte un corps creux 6 dans lequel est ménagé un logement présentant un axe longitudinal de symétrie X-X et dans lequel un étui 7 est adapté à coulisser à l'encontre d'un organe de rappel élastique 8, ici constitué par un ressort en spirale, qui tend à le ramener à proximité de l'élément 2 percé d'un orifice 9 adapté à être traversé par l'élément mâle.

Ce logement est ici formé d'une première zone cylindrique 6A de grand diamètre à proximité de l'élément 2 raccordée par un épaulement transversal 6B, pour l'appui du ressort 8, à une seconde zone cylindrique 6C de plus petit diamètre.

Le corps 6 est ici relié extérieurement par un filetage 15 à une coiffe 16, fermant en partie le logement et fixée à l'élément 2 par les boulons 5.

L'étui 7 est de même conformé en sorte de comporter un tronçon globalement cylindrique de grand diamètre 7A, adapté à coulisser avec un faible jeu dans la zone supérieure 6A du logement, et un tronçon cylindrique 7C de plus petit diamètre, adapté à coulisser avec un faible jeu dans la zone 6C du logement. Entre ces zones 7A et 7B est prévu un tronçon de transition 7B comportant, à partir de la zone 7A, un premier épaulement 10 pour l'appui du ressort 8, un tronçon cylindrique intermédiaire 11 et un second épaulement 12 se raccordant au tronçon 7C. Le premier tronçon cylindrique 7A comporte intérieurement une nervure annulaire 13 délimitant avec le premier épaulement 7C une gorge 14. Cette nervure annulaire 13 et ce premier épaulement 10, présentent en direction de l'orifice 9 des surfaces tronçoniques 10A et 13A formant cames.

Cet étui 7 présente au fond du second tronçon un orifice traversé par une buse d'injection 14 solidaire du corps creux 6 et disposé ici selon l'axe X-X. Cette base d'injection 14 communique au travers d'un bloc, avec un premier orifice 24 adapté à être connecté à une source de fluide sous pression/dépression A ainsi qu'avec un ou deux orifices 25 destinés à être connectés à une source de pression B adaptée à fournir des fronts brutaux de pression ; il s'agit en pratique d'un dispositif pyrotechnique. Il est à noter que dans l'exemple considéré un étranglement 26 est prévu entre l'orifice 24 et la base d'injection 14.

Dans le second tronçon 7C de l'étui 7 est engagé un piston creux 17 dans laquel est monté un doigt d'éjection 18 relié initialement au piston 17 par une goupille frangible à casser 19.

Des rondelles d'étanchéité 20, 21 et 22 sont respectivement prévues entre l'orifice du fond du second tronçon 7C et la buse d'injection 14, entre la paroi de ce second tronçon 7C et le piston creux 17, et entre la paroi intérieure de celui-ci et une portion de guidage du doigt d'éjection 18. Plus

3

précisément ces rondelles sont portées ici par l'orifice du fond du second tronçon 7C, par la paroi extérieure du piston creux 17 et par la paroi extérieure de la portion de guidage du doigt d'éjection 18.

Il est ainsi formé entre le fond du second tronçon 7C et le piston 17 complété par la partie de guidage du doigt d'éjection, une chambre étanche 23 dans laquelle débouche la buse d'injection 14.

Dans le premier tronçon 7A de l'étui 7, à proximité donc de l'élément à assujettir 2, est monté un manchon ou couronne de retenue 30 d'axe confondu selon X-X et adapté, soit à se rétracter radialement jusqu'à verrouiller en position l'élément mâle 3, soit à se dilater radialement pour libérer celui-ci, sous l'action de l'organe de manoeuvre que constitue le piston 17.

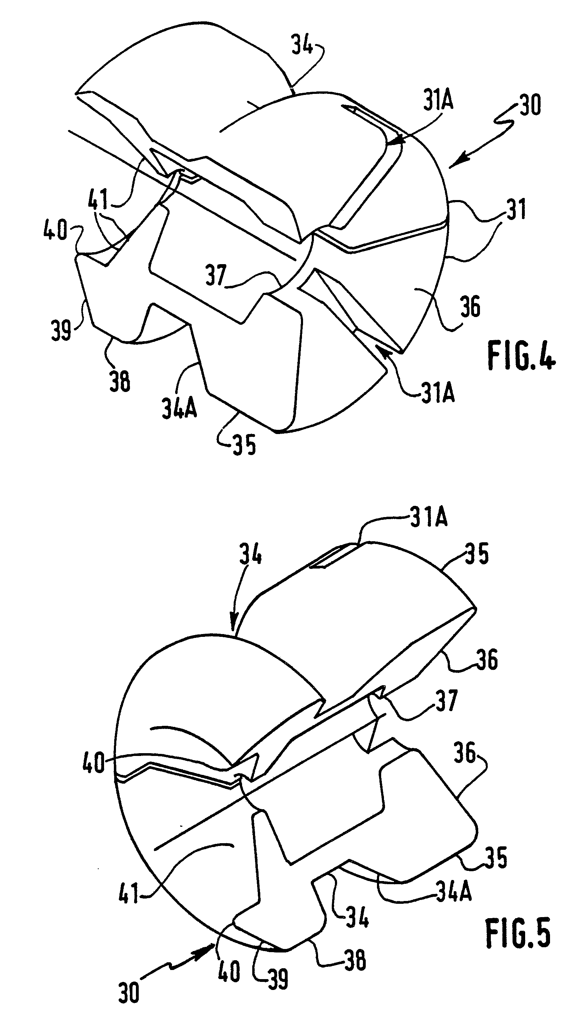

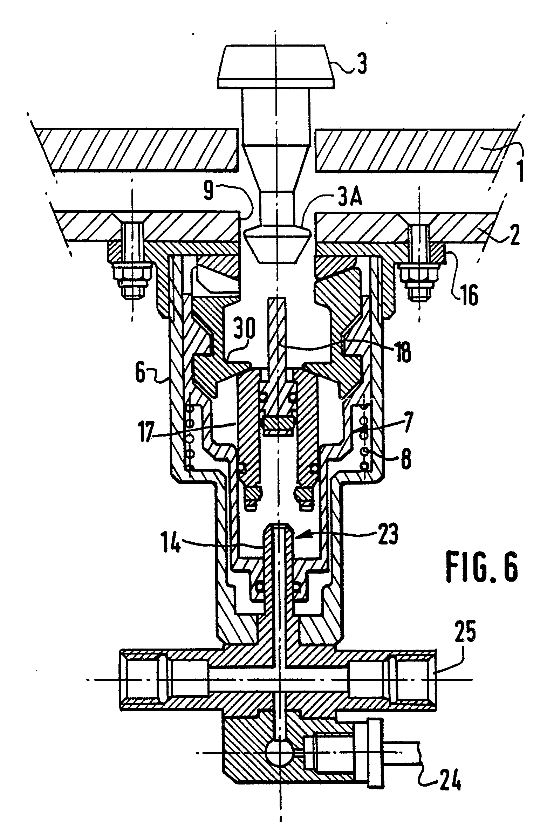

Ce manchon de retenue (ou manchon d'accrochage) 30 est ici formé de trois secteurs 31 identiques dont deux sont représentés en perspective aux figures 4 et 5. Dans les fentes radiales 31A de ces secteurs sont avantageusement engagés des ergots 32 solidaires d'une bague conique 33 solidaire de la coiffe 16, adaptés à permettre un mouvement radial de ces secteurs tout en en empêchant une éventuelle rotation. Des fentes radiales additionnelles peuvent être prévues dans les secteurs (voir les figures 1 à 3 et 6) pour recevoir d'autres ergots similaires de guidage radial.

Les secteurs 31 présentant sur leur paroi extérieure des zones en creux 34 définissant conjointement une gorge annulaire de profil complémentaire à celui de la nervure 13 de l'étui 7, avec des surfaces tronçoniques 34A formant came adaptées à coopérer avec la came 13A de la nervure annulaire 13.

Ces surfaces tronçoniques 34A se raccordent en direction de l'élément 2, à des portions en saillie 35 formant conjointement une nervure supérieure adaptée à coulisser axialement à l'intérieur de la nervure annulaire 13. Ces portions en saillie 35 sont bordées par des tranches 36 inclinées par rapport à l'axe X-X et adaptées à glisser radialement sur la bague conique 33. Les tranches se prolongent radialement vers l'axe en sorte de former un épaulement de retenue 37 adapté à retenir la couronne de retenue 3A de l'élément mâle 3.

Les zones en creux 34 se raccordent, en direction du second tronçon 7C de l'étui, par des zones en saillie 38 définissant conjointement une nervure en saillie radiale adaptée à coulisser axialement le long du tronçon cylindrique intermédiaire 11.

Dans l'exemple représenté les surfaces cylindriques bordant extérieurement les zones en saillie 35 et 38 sont de même diamètre, et il en est de même des surfaces cylindriques bordant intérieurement la nervure 13 et le tronçon intermédiaire 11.

Les zones en saillie radiale 38 se raccordent à des tranches 39 inclinées formant came présentant des saillies axiales 40 adaptées à longer extérieurement le piston creux 17 et des surfaces inclinées se prolongeant vers l'axe 41 adaptées, à la manière de cames, à glisser sur la tranche tronçonique 17A du piston.

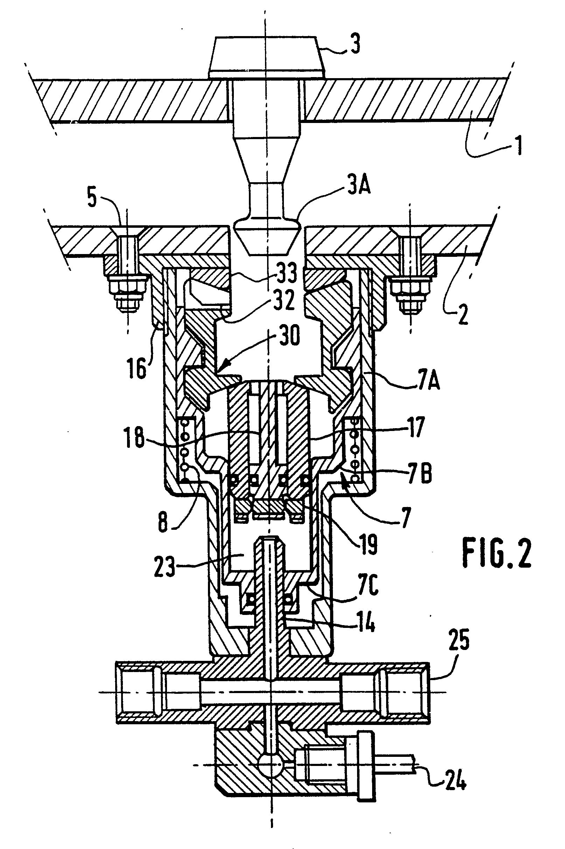

Les figures 1 et 2 représentent le dispositif dans des configurations de verrouillage et de déverrouillage respectivement.

Au repos, du fait du ressort 8, le dispositif prend la configuration de la figure 1. L'application à l'orifice 24 d'une pression de fluide se traduit, grâce à l'étranglement 26, par l'injection dans la chambre 23 d'une pression variant progressivement. Il en découle une montée du piston 17 qui, du fait de la collaboration des surfaces 41 et 17A, et des surfaces 13 et 36, force les secteurs 31 du manchon de retenue à s'écarter jusqu'à ce que les saillies et les creux de l'étui et du manchon se comblent mutuellement. L'élément mâle est alors libéré : l'élément 2 peut être alors écarté par tout moyen approprié, notamment manuellement ou par un système asservi. On aboutit à la configuration de la figure 2.

Si à l'inverse on veut reverrouiller les éléments 1 et 2, on introduit l'élément mâle dans le manchon de retenue et on crée une dépression dans la chambre 23 dont le volume tend alors à rétrécir. Le piston 17 recule et, du fait du ressort 8, l'étui 7 remonte dans le corps 6 et provoque le rapprochement des secteurs 31 du manchon de retenue qui emprisonne la couronne de retenue 3A.

Ces opérations peuvent être répétées sans dommage autant de fois qu'on le souhaite.

Lorsque l'on veut finalement procéder au largage de l'élément 1, on introduit une pression d'origine pyrotechnique dans les orifices 25 ce qui provoque comme précédemment la montée du piston 17 et l'écartement des secteurs 31 du manchon 30 mais en outre, au-delà d'un seuil d'un seuil de pression prédéterminé, la rupture de la goupille frangible 19 et la remontée brutale du doigt d'éjection 18, ce qui provoque à force l'éjection de l'élément mâle hors de l'élément femelle.

Il va de soi que la description qui précède n'a été proposée qu'à titre d'exemple non limitatif et que de nombreuses variantes peuvent être proposées par l'homme de l'art sans sortir du cadre de l'invention.

On peut bien sûr utiliser plusieurs dispositifs du type décrit pour l'accouplement ou le désaccouplement des éléments 1 et 2, la synchronisation des opérations de largage pouvant être obtenue par le montage en série, avec un minimum de pertes de charge, des orifices 25.

## Revendications

1. Dispositif pour la solidarisation provisoire de deux éléments (1,2) l'un à l'autre, et leur séparation ultérieure, caractérisé en ce qu'il comporte un élément mâle (3) lié à l'un (1) des éléments et un élément femelle (4) lié à l'autre (2) élément, cet élément femelle comportant, dans un corps creux (6) allongé selon un axe (X-X), un manchon de retenue (30) adapté à se rétracter radialement sur l'élément mâle ou à se dilater, un piston coulissant axialement (17) pour la manoeuvre en rétraction/dilatation de ce manchon de retenue, et dans le piston, disposé le long de l'axe (X-X), un doigt d'éjection (18) qui lui est relié par un organe frangible (19), des moyens de commande sélective (14,23,24,25) étant prévus, soit pour la seule commande en mouvement du piston, soit pour en outre casser l'organe frangible et faire coulisser axialement le doigt d'éjection axialement en saillie vis-à-vis de ce piston.

2. Dispositif selon la revendication 1 caractérisé en ce que les moyens de commande comportent une chambre étanche (23) ménagée sur une tranche du piston dans laquelle débouche une buse d'injection (14) pour injecter du fluide sous pression .

3. Dispositif selon la revendication 2 caractérisé en ce que la buse d'injection (14) communique avec un premier orifice (24) adapté à être connecté à une source de pression/dépression (A), et avec un second orifice (25) adapté à être connecté à une source pyrotechnique de pression (B).

4. Dispositif selon l'une quelconque des revendications 1 à 3, caractérisé en ce que le manchon de retenue (30) est formé d'une pluralité de secteurs (31) adaptés à s'écarter et se rapprocher de l'axe (X-X).

5. Dispositif selon la revendication 4, caractérisé en ce que chaque secteur (31) comporte une tranche inclinée (41) formant came adaptée à glisser sur une tranche globalement tronçonique (17A) du piston (17) et une tranche opposée inclinée (36) formant came adaptée à coopérer avec une bague tronçonique (33) liée au corps (6) de l'élément femelle et adaptée à être traversée par l'élément mâle.

6. Dispositif selon la revendication 5, caractérisé en ce qu'un tronçon cylindrique (7A) de guidage est monté coulissant axialement le long du manchon de retenue (30), des surfaces globalement tronçoniques formant cames (39,34A; 10A,13A) étant ménagées, respectivement extérieurement sur le manchon de retenue (30) et intérieurement sur ce tronçon de guidage (7A), adaptées par coopération réciproque à guider en rétraction et en dilatation les secteurs (31) du manchon de retenue.

7. Dispositif selon la revendication 6, caractérisé en ce que ce tronçon de guidage (7A) fait partie d'un étui (7) coulissant axialement dans le corps (6) de l'élément femelle à l'encontre d'un organe de rappel élastique (8), comportant un second tronçon cylindrique de guidage (7C) de plus faible diamètre que le premier tronçon (7A), coulissant le long du piston et dont le fond, traversé par la buse d'injection, définit avec le piston une chambre étanche de pression (23).

8. Dispositif selon la revendication 7, caractérisé en ce que l'organe de rappel élastique (8) tend à ramener l'étui dans une configuration où le premier tronçon de guidage (7A) tend à maintenir le manchon de retenue rétracté.

9. Dispositif selon l'une quelconque des revendications 1 à 8, l'élément mâle comporte une couronne de retenue (3A) adaptée à être retenue par des épaulements (37) ménagés en saillie radialement interne sur le manchon de retenue.

10. Dispositif selon l'une quelconque des revendications 1 à 9, caractérisé en ce que l'organe frangible (19) est une goupille transversale présentant des zones affaiblies.

FIG.1

EP 0 363 242 A1

FIG.2

FIG.3

FIG.4

FIG.5

FIG. 6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-3 597 919 (J.L. LILLY) * Colonne 2, ligne 53 - colonne 3, ligne 42; figures * | 1-10 | B 64 G 1/64 F 42 B 3/00 |
| A | US-A-4 187 759 (TOY et al.) * Colonne 3, lignes 29-51; figures * | 1-10 | |
| A,D | US-A-4 002 120 (SWALES et al.) * En entier * | 1-10 | |
| A | US-A-3 334 536 (J.P. ARMSTRONG) * Figures * | 1-10 | |
| A | FR-A-2 550 832 (GKN AUTOMOTIVE COMPONENTS INC.) * Résumé; figurés * | 4 | |
| A,D | US-A-2 858 726 (D.A. ROBINSON et al.) * En entier * | 10 | |
| A,D | US-A-4 064 783 (ESS) | | **DOMAINES TECHNIQUES RECHERCHES (Int. Cl.5)** |
| A,D | US-A-3 196 745 (W.H. SUSTRICH et al.) | | B 64 G B 64 D F 42 B F 16 B |

Le présent rapport a été établi pour toutes les revendications

| Lieu de la recherche | Date d'achèvement de la recherche | Examinateur |
|---|---|---|
| LA HAYE | 22-12-1989 | ESTRELA Y CALPE J. |